# EUROPEAN PATENT APPLICATION

(11) **EP 3 275 723 A1**
(43) Date of publication of application: **31.01.2018**
(21) Application number: 16768535.3
(22) Date of filing: 15.03.2016
(51) Int. Cl.: B60L 15/20, B60W 30/045

(54) **VEHICLE CONTROL DEVICE AND VEHICLE CONTROL METHOD**

(30) Priority: 23.03.2015 JP 2015058978
(71) Applicant: Hitachi Automotive Systems, Ltd., Hitachinaka-shi, Ibaraki 312-8503 (JP)
(72) Inventor: SUZUKI, Keisuke, Atsugi-shi Kanagawa 243-8510 (JP); NAKAMIZO, Masahiro, Atsugi-shi Kanagawa 243-8510 (JP); KANEKO, Satoshi, Atsugi-shi Kanagawa 243-8510 (JP)
(74) Representative: Hoefer & Partner Patentanwälte mbB
(86) International application number: PCT/JP2016/058062
(87) International publication number: WO 2016/152632

(57) **Abstract**

An object of the present invention is to provide a vehicle control apparatus and a vehicle control method capable of improving traceability when a speed reduction torque is applied.

A vehicle control apparatus according to the present invention is configured to calculate the speed reduction torque to be generated on a vehicle based on an accelerator operation state and a front wheel slip angle. More specifically, when being brought into a turning state while a coasting torque is applied, the vehicle control apparatus makes a correction so as to reduce an absolute value of the coasting torque, thereby improving the traceability and the drivability.

## Description

### TECHNICAL FIELD

The present invention relates to an apparatus for controlling a vehicle and a method for controlling a vehicle.

### BACKGROUND ART

Conventionally, there has been known a technique discussed in PTL 1 as an apparatus for controlling a vehicle. A technique discussed in this patent literature generates a speed reduction torque corresponding to an engine brake by a regenerative braking force of a motor, thereby acquiring a comfortable braking feeling and also improving efficiency of collecting energy by regenerative braking.

### CITATION LIST

### PATENT LITERATURE

[PTL 1] Japanese Patent Application Public Disclosure No. H6-153315

### SUMMARY OF INVENTION

### TECHNICAL PROBLEM

However, applying a speed reduction torque corresponding to the engine brake when a vehicle is turning in a similar manner to when the vehicle is running straight causes the vehicle to be slowed down more than a driver's intention due to an increase in a cornering resistance. In this case, a reduction in a turning radius may result in deterioration of followability to a running line intended by the driver (hereinafter referred to as traceability).

The present invention has been made in consideration of the above-described drawback, and an object of the present invention is to provide a vehicle control apparatus and a vehicle control method capable of improving the traceability when the speed reduction torque is applied.

### SOLUTION TO PROBLEM

To achieve the above-described object, a vehicle control apparatus according to one aspect of the present invention is configured to calculate a speed reduction torque to be generated on a vehicle based on an accelerator operation state and a front wheel slip angle.

### ADVANTAGEOUS EFFECTS OF INVENTION

Therefore, the speed reduction torque can be applied according to a running state, and the traceability can be improved.

### BRIEF DESCRIPTION OF DRAWINGS

Fig. 1 is a system diagram illustrating a configuration of an electric vehicle according to a first embodiment.
Fig. 2 is a control block diagram illustrating a content of information transmitted and received by each controller according to the first embodiment.
Fig. 3 is a control block diagram illustrating a configuration of a speed reduction torque calculation portion provided in a vehicle controller according to the first embodiment.
Fig. 4 illustrates a front wheel model according to the first embodiment.
Fig. 5 is a characteristic diagram illustrating a relationship between a vehicle speed and a turning radius.
Fig. 6 is a timing chart when a vehicle is turning at the time of coasting running according to the first embodiment and a comparative example.
Fig. 7 is a schematic view illustrating running lines according to the first embodiment and the comparative example along the timing chart illustrated in Fig. 6.
Fig. 8 illustrates a slip rate curve indicating a relationship between a slip rate and a tire force of a tire on a low µ road.
Fig. 9 illustrates friction circles of the tire on a high µ road and the low µ road.
Fig. 10 is a schematic view illustrating running lines according to the first embodiment and the comparative example when the vehicle is turning in the coasting running state.
Fig. 11 is a control block diagram illustrating a configuration of a speed reduction torque calculation portion provided in a vehicle controller according to a second embodiment.

### DESCRIPTION OF EMBODIMENTS

### (First Embodiment)

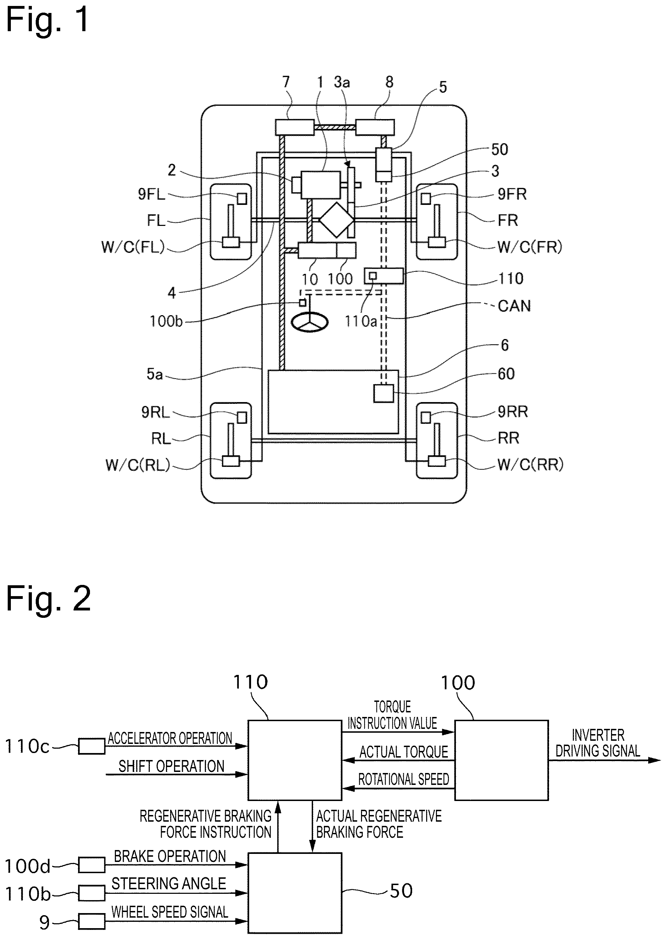

Fig. 1 is a system diagram illustrating a configuration of an electric vehicle according to a first embodiment. The electric vehicle is a front-wheel drive vehicle, and includes front wheels FR and FL, which are drive wheels, and rear wheels RR and RL, which are trailer wheels. Each of the wheels includes a wheel cylinder W/C(FR), W/C(FL), W/C(RR), or W/C(RL) (also referred to as simply W/C), which generates a frictional braking force by pressing brake pads against a brake rotor rotating integrally with a tire, and a wheel speed sensor 9(FR), 9(FL), 9(RR), or 9(RL) (also referred to as simply 9), which detects a wheel speed of each of the wheels. A hydraulic unit 5 is connected to the wheel cylinder W/C via a hydraulic pipe 5a, thereby forming a hydraulic brake mechanism. Further, the electric vehicle includes a steering-operation steering angle sensor 110b (corresponding to a steering operation state detection portion), which detects a steering-operation steering angle indicating a steering-operation steering state of a driver.

The hydraulic unit 5 includes a plurality of electromagnetic valves, a reservoir, a pump motor, and a brake controller 50, and controls a wheel cylinder hydraulic pressure at each of the wheels by controlling driving states of various kinds of electromagnetic valves and the pump motor based on an instruction from the brake controller 50. The brake controller 50 includes a yaw rate sensor 110a, which detects a yaw rate of the vehicle. The hydraulic unit 5 may be a known brake-by-wire unit, or may be a brake unit including a hydraulic circuit capable of realizing vehicle stability control. The type of the hydraulic unit 5 is not especially limited.

An electric motor 1, which serves as a driving source, is provided with a resolver 2, which detects a rotational angle of the motor, and detects the rotational angle of the motor and also detects a moto rotational speed Nm based on a signal of the resolver. A differential gear 3 is connected to the electric motor 1 via a speed reduction mechanism 3a, and the front wheels FR and RL are connected to a drive shaft 4 connected to the differential gear 3. A high-voltage battery 6 and a battery controller 60 are mounted on a rear side of the vehicle. The high-voltage battery 6 supplies driving power to the electric motor 1 or collects regenerated power. The battery controller 60 monitors and controls a battery state of the high-voltage battery 6. An inverter 10, which is disposed between the high-voltage battery 6 and the electric motor 1, is controlled by a motor controller 100. Further, an auxiliary device battery 8 is connected to the high-voltage battery 6 via a DC-DC converter 7, and functions as a power source for driving the hydraulic unit 5. The electric vehicle according to the first embodiment is provided with a CAN communication line that is an in-vehicle communication line to which a plurality of controllers mounted on the vehicle is connected, whereby the steering-operation steering angle sensor 110b, the brake controller 50, the vehicle controller 110, the battery controller 60, and the like are connected to one another so as to be able to communicate information.

Fig. 2 is a control block diagram illustrating a content of information transmitted and received by each of the controllers according to the first embodiment. The vehicle controller 110 receives accelerator pedal opening degree information detected by an accelerator pedal opening degree sensor 110c, which detects an accelerator pedal opening degree APO, steering-operation steering angle information detected by the steering-operation steering angle sensor 110b, and shift position information, calculates a torque instruction value based on a basic driver request torque and a result of a regenerative braking force instruction value from the brake controller 50, and outputs the torque instruction value to the motor controller 100.

The brake controller 50 receives brake operation information detected by a brake pedal sensor 110d that indicates the driver's braking intention, such as an ON/OFF state of a brake switch, a brake pedal stroke amount, or a brake pedal pressing force, which indicates a brake pedal operation state, a steering-operation steering angle θf, a yaw rate ϕ, and the wheel speed signal of each of the wheels, calculates the brake hydraulic pressure to be supplied to the wheel cylinder W/C and a regenerative braking force to be generated by the electric motor 1, and outputs the regenerative braking instruction value to the vehicle controller 110. At the same time, the brake controller 50 outputs information regarding the brake pedal operation state and information of various kinds of signals such as the yaw rate ϕ, and the wheel speed signal to the vehicle controller 110. Further, the brake controller 50 receives actual regenerative braking force information from the vehicle controller 110, thereby performing feedback control of the regenerative braking force that guarantees a braking force by which the regenerative braking force is insufficient for the instruction with use of a frictional braking force. The electric vehicle according to the first embodiment calculates a vehicle speed VSP based on the wheel speed detected by the wheel speed sensor 9, but may calculate the vehicle speed VSP based on the motor rotational speed Nm, a gear ratio of the speed reduction mechanism 3a, and the like, or may receive a signal regarding the wheel speed VSP from another controller or the like. How to acquire the vehicle speed VSP is not especially limited.

The motor controller 100 controls an activation state of the electric motor 1 based on the torque instruction value, and outputs information indicating an actual torque generated by the electric motor 1 to the vehicle controller 110 based on a detected motor torque Tm, the motor rotational speed Nm, a current value, and the like.

### (Regarding Details of Control in Controller)

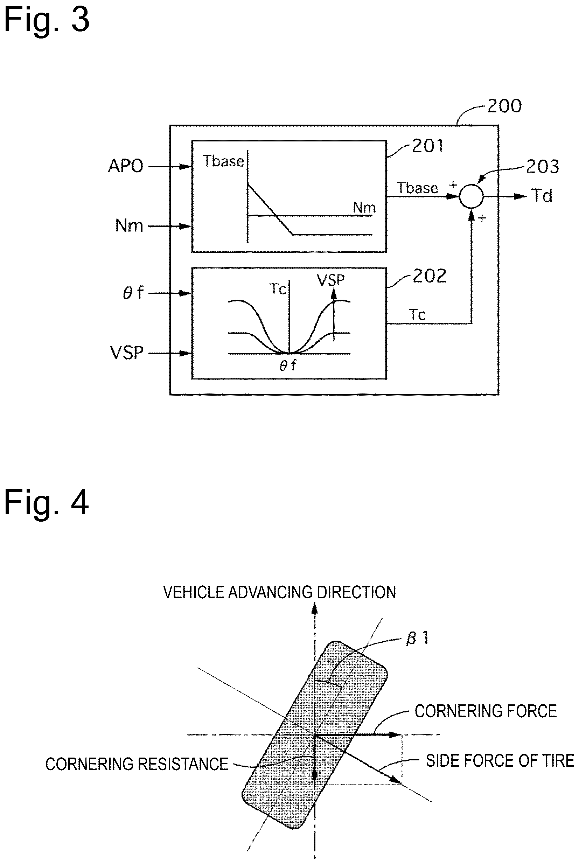

Fig. 3 is a control block diagram illustrating a configuration of a speed reduction torque calculation portion provided in the vehicle controller according to the first embodiment. A speed reduction torque calculation portion 200 according to the first embodiment includes a reference speed reduction torque calculation portion 201 and a speed reduction torque correction portion 202, and calculates a speed reduction torque Td imitating the engine brake when the driver releases the accelerator pedal with APO = 0 and the brake switch is set to OFF (a so-called coasting running state).

The reference speed reduction torque calculation portion 201 sets a reference speed reduction torque map according to a running state (a map according to the coasting running state in the case of the first embodiment) based on the accelerator pedal opening degree APO. Then, the reference speed reduction torque calculation portion 201 calculates a reference speed reduction torque Tbase (corresponding to a reference speed reduction torque before a correction) based on the motor rotational speed Nm detected by the resolver 2. In the case of the first embodiment, the electric motor 1 drives the front wheels via the speed reduction mechanism 3a, whereby the motor rotational speed Nm is a value substantially correlating with the vehicle speed VSP. The reference speed reduction torque map applies a speed reduction torque imitating the engine brake that would be generated on a normal engine vehicle in a region where the motor rotational speed Nm is high. On the other hand, the reference speed reduction torque map applies a driving torque imitating a creep torque in a low vehicle speed region where the creep torque would be generated on the normal engine vehicle.

The speed reduction torque correction portion 202 includes a plurality of correction torque maps set according to the vehicle speed VSP. In each of these correction torque maps, the steering-operation steering angle θf and a correction torque Tc are set on a horizontal axis and a vertical axis, respectively. Each of the correction torque maps sets a characteristic in which the correction torque Tc increases as the vehicle speed VSP increases. The speed reduction torque correction portion 202 sets an appropriate correction torque map based on the vehicle speed VSP. Then, the speed reduction torque correction portion 202 calculates the correction torque Tc based on the steering-operation steering angle θf. Each of the correction torque maps sets a characteristic in which the correction torque Tc increases as the driver further turns the steering wheel.

Further, a change amount of the correction torque with respect to the steering-operation steering angle θf is set to a small amount in a region where the steering-operation steering angle θf is large and a region where the steering-operation steering angle θf is small, and is set to a large amount in an intermediate region between the regions where the steering-operation steering angle θf is large and small, respectively. This setting is a setting defined along a change characteristic of a front wheel slip angle with respect to the steering-operation steering angle θf, and, in other words, a setting defined by calculating the front slip angle from the vehicle speed VSP and the steering-operation steering angle θf and setting the change amount of the correction torque according to this front wheel slip angle characteristic as the correction torque map. This characteristic is set bilaterally symmetrically while being centered at a neutral position of the steering-operation steering angle θf. Then, a pre-calculated cornering resistance is calculated based on the vehicle speed VSP, the steering-operation steering angle θf, and vehicle dimensions, and the correction torque map is mapped as the correction torque Tc capable of compensating for this cornering resistance.

An addition portion 203 adds the calculated correction torque Tc (a positive value) to the calculated reference speed reduction torque Tbase (a negative value), and outputs a final speed reduction torque Td (corresponding to the reference speed reduction torque after the correction).

Now, a reason why the correction torque is applied will be described. Fig. 4 illustrates a front wheel model according to the first embodiment. When the driver steers the steering wheel while driving the vehicle at some vehicle speed VSP, the front wheel turns according to the steering-operation steering angle θf. There is such a relationship between the front wheel tire and a road surface that they intersect with each other by an angle β1 with respect to an advancing direction of the vehicle. This intersection angle is the front wheel slip angle β1. At this time, a side force is generated on the tire in a direction along a rotational axis of the tire. Components of this side force is a cornering force perpendicular to the vehicle advancing direction and a cornering resistance in an opposite direction from the vehicle advancing direction. When the driver operates the steering wheel while the speed reduction torque that is the coasting torque is applied in the coasting running state, the cornering resistance is generated according to the front wheel slip angle β1. Therefore, the cornering resistance is applied to the vehicle in addition to the speed reduction torque, so that the vehicle is slowed down even if the driver does not intend to slow down the vehicle more than that.

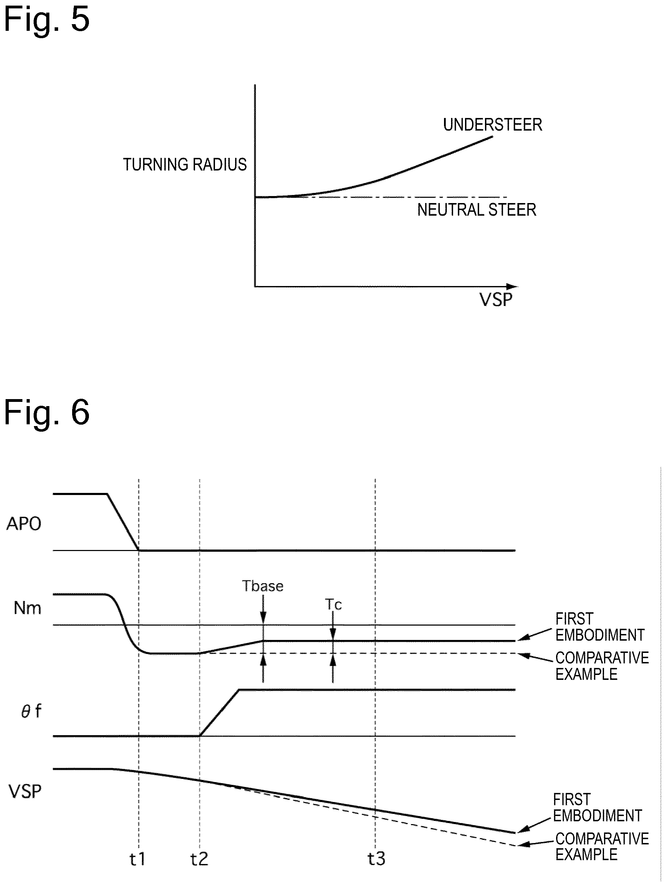

Fig. 5 is a characteristic diagram illustrating a relationship between the vehicle speed and a turning radius. As indicated by the characteristic diagram illustrated in Fig. 5, assuming that the steering-operation steering angle θf is kept constant, the turning radius according to the steering-operation steering angle θf is not changed so much even if the vehicle speed VSP is changed in the low vehicle speed region. On the other hand, in the high vehicle speed region, maintaining the same vehicle response to the steering-operation steering angle θf as the vehicle response in the low vehicle speed region may deteriorate stability on the contrary. Therefore, common vehicles are designed to understeer in the high vehicle speed region. In other words, in the high vehicle speed region, the turning radius increases according to an increase in the vehicle speed VSP even when the steering-operation steering angle θf is the same.

In other words, as described with reference to Fig. 4, when the vehicle speed VSP reduces due to the cornering resistance when the vehicle is turning, the turning radius reduces as illustrated in Fig. 5. Then, the turning radius reduces more than the driver's intention, so that the traceability of the vehicle reduces. Therefore, the driver is required to add corrective steering to compensate for the reduction in the traceability. Further, pitching is generated on the vehicle due to the increase in the cornering resistance, so that a vibration of a vehicle body may increase when the vehicle is turning or ends the turning. In addition, the vehicle is slowed down due to the turn, so that the driver is required to speed up the vehicle by pressing the accelerator pedal again to compensate for the speed reduction when the vehicle ends the turning. In this manner, there is a problem of making the driving complicated (hereinafter referred to as a reduction in drivability).

Then, in the first embodiment, the vehicle controller is configured to compensate for the speed reduction corresponding to the cornering resistance by reducing an absolute value of the speed reduction torque according to the turning state when applying the speed reduction torque imitating the engine brake, thereby improving the traceability and the drivability. More specifically, the cornering force is generated due to the front wheel slip angle β1, which is the angle defined between the vehicle advancing direction and the front wheel, and the cornering resistance is also generated due to the front wheel slip angle β1 when the vehicle is turning. Therefore, the vehicle controller can improve the traceability and the drivability by correcting the speed reduction torque so as to reduce the absolute value of the speed reduction torque Td based on the front wheel slip angle β1 to thereby prevent or reduce the pitching accompanying the increase in the cornering resistance. In the first embodiment, the vehicle controller calculates the correction torque Tc capable of compensating for the cornering resistance from the correction torque map based on the vehicle speed VSP, the steering-operation steering angle θf, and the vehicle dimensions, but may calculate the front wheel slip angle β1 while the vehicle is running based on a further accurate vehicle model, calculate the cornering resistance from the front wheel slip angle β1, and then calculate the correction torque capable of compensating for the cornering resistance. How to calculate this correction torque is not especially limited.

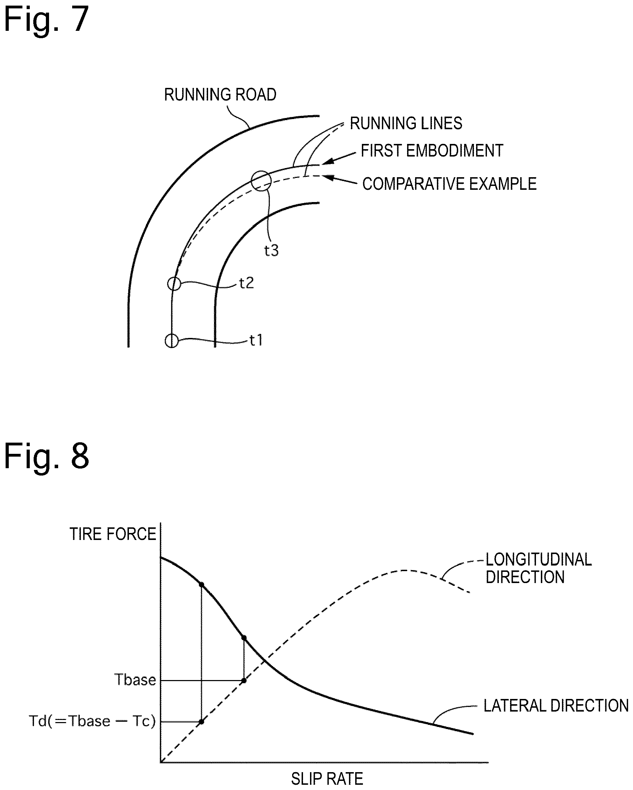

Fig. 6 is a timing chart when the vehicle is turning at the time of the coast running according to the first embodiment and a comparative example. Fig. 7 is a schematic view illustrating running lines according to the first embodiment and the comparative example along the timing chart illustrated in Fig. 6. The comparative example is a vehicle that does not correct the speed reduction torque according to the turning at the time of the coast running.

At time t1, when the driver releases the accelerator pedal and shifts to the coast running, the reference speed reduction torque Tbase imitating the engine brake is applied.

At time t2, when the driver operates the steering wheel and the steering-operation steering angle θf is generated, the cornering resistance is generated based on the front wheel slip angle β1. At this time, in the comparative example, the reference reduction torque Tbase is not corrected based on the correction torque Tc, so that the turning radius reduces due to the speed reduction corresponding to the cornering resistance despite the steering-operation steering angle θf kept constant when it becomes time t3. Therefore, as illustrated in Fig. 7, the comparative example results in an advancement along a running line displaced to an inner side with respect to a running road, thereby leading to the deterioration of the traceability. On the other hand, in the first embodiment, the reference reduction torque Tbase is corrected based on the correction torque Tc in such a manner that the absolute value of the reference reduction torque Tbase reduces, which can compensate for the speed reduction corresponding to the cornering resistance and prevent the turning radius from reducing when it becomes time t3. Therefore, as illustrated in Fig. 7, the vehicle can advance along a central running line with respect to the running road, thereby improving the traceability.

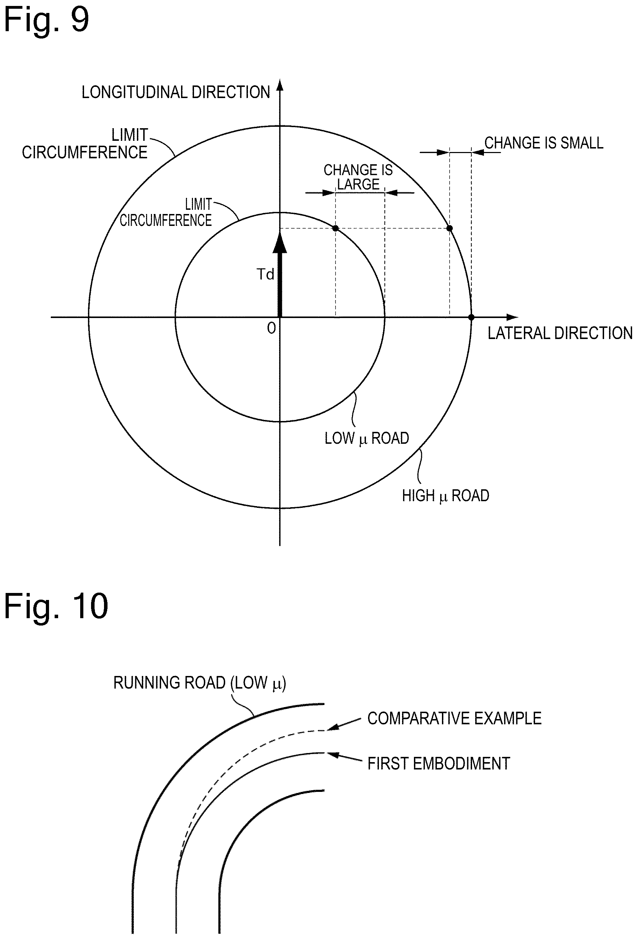

Next, a function at the time of the coast running on a low µ road will be described. Fig. 8 is a schematic view illustrating a slip rate curve indicating a relationship between a slip rate and a tire force of the tire on the low µ road. Fig. 9 is a schematic view illustrating friction circles of the tire on a high µ road and the low µ road. Fig. 10 is a schematic view illustrating running lines when the vehicle is turning in the coast running state according to the first embodiment and the comparative example. In Fig. 8, a solid line indicates a lateral tire force, and a botted line indicates a longitudinal tire force. The comparative example is the vehicle that does not correct the speed reduction torque according to the turning at the time of the coast running.

If the reference reduction torque Tbase is applied without being corrected, like the comparative example, the slip rate increases according to the torque applied to the tire. As indicated by the friction circle illustrated in Fig. 9, when the vehicle is running on the high µ road, a radius of the friction circle of the tire is large, so that the vehicle uses a region around a center of the friction circle (in other words, uses a region away from a limit circumference of the friction circle) even when the coasting torque is applied, and therefore the lateral tire force does not reduce so much due to the increase in the slip rate. However, as illustrated in Fig. 9, when the vehicle is running on the low µ road, a radius of the friction circle is small, so that the vehicle easily approaches around a limit circumference of the friction circle even when a relatively small speed reduction torque like the coasting torque is applied. Therefore, although the longitudinal tire force increases as far as a certain level of slip rate, the lateral tire force easily significantly reduces according to the increase in the slip rate. Therefore, like a running line indicated by a dotted line illustrated in Fig. 10, the turning radius increase due to the insufficiency of the lateral tire force, which raises a possibility of the deterioration of the traceability.

On the other hand, in the first embodiment, the reference reduction torque Tbase is corrected based on the correction torque Tc, so that the absolute value of the reference reduction torque Tbase reduces. Therefore, the vehicle controller can avoid the approach to the limit circumference of the friction circle, thereby preventing or reducing the insufficiency of the lateral tire force. Therefore, like the running line indicated by the solid line illustrated in Fig. 9, the vehicle controller can secure the lateral tire force to avoid the increase in the turning radius, thereby improving the traceability. In this manner, regardless of whether the vehicle is running on the high µ road or the low µ road, both the traceability and the drivability can be improved by correcting the speed reduction torque in such a manner that the absolute value of the speed reduction torque reduces based on the turning state.

In the above-described manner, the first embodiment can bring about the following advantageous effects.
(1-1) The vehicle control apparatus includes the accelerator pedal opening degree sensor 110c (an accelerator operation state detection portion) configured to detect the accelerator pedal opening degree APO (an accelerator operation state) of the driver, the steering-operation steering angle sensor 110b configured to detect the steering-operation steering angle θf indicating the steering operation state of the driver (a front wheel slip angle calculation portion configured to calculate the slip angle of the front wheels FR and FL), and the speed reduction torque calculation portion 200 configured to calculate the speed reduction torque Td to be generated on the vehicle based on the detected accelerator pedal opening degree APO and the detected steering-operation steering angle θf (the calculated front wheel slip angle).
   Therefore, the vehicle control apparatus can improve the traceability and the drivability because controlling the speed reduction torque according to the torque applied from the road surface to the front wheel. In the first embodiment, the vehicle control apparatus calculates the speed reduction torque from the correction torque map based on the steering-operation steering angle θf and the vehicle speed VSP, but may perform control with use of not only the steering-operation steering angle θf but also another parameter as long as this parameter is a value relating to the front wheel slip angle generated when the torque is applied from the road surface to the front wheel.
(1-2) In the vehicle control apparatus described in the above-described item (1-1), the speed reduction torque calculation portion 200 includes the reference speed reduction torque calculation portion 201 configured to calculate the reference speed reduction torque Tbase, and the speed reduction torque correction portion 202 configured to correct the reference speed reduction torque Tbase based on the detected accelerator pedal opening degree APO and the detected steering-operation steering angle θf.
   Therefore, the vehicle control apparatus can easily calculate the appropriate speed reduction torque Td by correcting the reference speed reduction torque Tbase.
(1-3) In the vehicle control apparatus described in the above-described item (1-2), the speed reduction torque correction portion 202 corrects the reference speed reduction torque in such a manner that the absolute value of the speed reduction torque Td (the reference speed reduction torque after the correction) falls below the absolute value of the reference speed reduction torque Tbase before the correction.
   Therefore, the vehicle control apparatus can prevent the vehicle from being slowed down more than the driver's intention and the turning radius from reducing, thereby improving the traceability and the drivability.
(1-4) In the vehicle control apparatus described in the above-described item (1-3), the speed reduction torque correction portion 202 corrects the reference speed reduction torque when the accelerator pedal opening degree APO (the detected accelerator operation state) is in the non-operation state.
   Therefore, the vehicle control apparatus can improve the traceability and the drivability in the coasting running state.
(1-5) The vehicle control apparatus described in the above-described item (1-4) further includes the steering-operation steering angle sensor 110b (a steering operation state detection portion) configured to detect the steering-operation steering state of the driver. The front wheel slip angle is calculated based on the steering-operation steering angle θf. The speed reduction torque correction portion 202 corrects the reference speed reduction torque in such a manner that the absolute value of the speed reduction torque Td (the reference speed reduction torque after the correction) when the steering-operation steering angle θf is large falls below the absolute value of the speed reduction torque Td (the reference speed reduction torque after the correction) when the steering-operation steering angle θf is small.
   Therefore, the vehicle control apparatus can acquire the appropriate traceability according to the steering-operation steering angle θf.
(1-6) The vehicle control apparatus described in the above-described item (1-5) further includes the wheel speed sensor 9 (a speed calculation portion) configured to calculate the vehicle speed VSP (a speed of the vehicle or a speed at which a wheel rotates). The speed reduction torque correction portion 202 corrects the reference speed reduction torque in such a manner that the absolute value of the speed reduction torque Td (the reference speed reduction torque after the correction) when the vehicle speed VSP is high falls below the absolute value of the speed reduction torque Td (the reference speed reduction torque after the correction) when the vehicle speed VSP is low.
   Therefore, the vehicle control apparatus can acquire the appropriate traceability and drivability according to the vehicle speed VSP.
(1-7) In the vehicle control apparatus described in the above-described item (1-1), when the accelerator pedal opening degree APO is APO = 0 (the detected accelerator operation state is in a non-operation state), the absolute value of the speed reduction torque Td when the steering-operation steering angle θf is calculated (when the front slip angle is calculated) is smaller than the absolute value of the speed reduction torque before the front wheel slip angle is calculated.
   Therefore, the vehicle control apparatus can improve the traceability and the drivability when the vehicle is turning in the coasting running state.
(1-8) In the vehicle control apparatus described in the above-described item (1-7), the absolute value of the speed reduction torque Td when the steering-operation steering angle θf (the front wheel slip angle) is large is smaller than the absolute value of the speed reduction torque Td when the steering-operation steering angle θf is small.
   Therefore, the vehicle control apparatus can apply the speed reduction torque Td according to the cornering resistance generated due to the front wheel slip angle, thereby improving the traceability and the drivability.
(1-9) In the vehicle control apparatus described in the above-described item (1-8), the change amount of the speed reduction torque Td in the region where the steering-operation steering angle θf (the front wheel slip angle) is large and the region where the steering-operation steering angle θf (the front wheel slip angle) is small is smaller than the change amount of the speed reduction torque in the region between the region where the steering-operation steering angle θf (the front wheel slip angle) is large and the region where the steering-operation steering angle θf (the front wheel slip angle) is small.
   More specifically, the vehicle control apparatus can apply the speed reduction torque Td based on the cornering resistance in compliance with the change characteristic of the front wheel slip angle by setting the change amount of the correction torque to a small amount in the region where the steering-operation steering angle θf is large and the region where the steering-operation steering angle θf is small and set the change amount of the correction torque to a large amount in the intermediate region between the regions where the steering-operation steering angle θf is large and small, respectively, as indicated by the correction torque map, thereby improving the traceability and the drivability.
(1-10) In the vehicle control apparatus described in the above-described item (1-8), the absolute value of the speed reduction torque Td reduces as the front wheel slip angle increases.
   More specifically, the cornering resistance increases as the front wheel slip angle increases. Therefore, the vehicle control apparatus can compensate for the speed reduction corresponding to the cornering resistance based on the front wheel slip angle, thereby improving the traceability and the drivability.
(1-11) The vehicle control apparatus described in the above-described item (1-7) further includes the wheel speed sensor 9 (a speed calculation portion) configured to calculate the vehicle speed (VSP) (a speed of the vehicle or a speed at which a wheel rotates). The absolute value of the speed reduction torque Td when the vehicle speed VSP is high is smaller than the absolute value of the speed reduction torque Td when the vehicle speed VSP is low.
   Therefore, the vehicle control apparatus can acquire the appropriate traceability and drivability according to the vehicle speed VSP.
(1-12) The vehicle control apparatus described in the above-described item (1-1) further includes the brake pedal sensor 110d (a brake operation state detection portion) configured to detect the brake operation state of the driver. The speed reduction torque calculation portion calculates the speed reduction torque Td when the detected brake operation state is in the non-operation state.
   Therefore, the vehicle control apparatus can acquire the speed reduction torque according to the driver's intention for the coasting running.
(1-13) In the vehicle control apparatus described in the above-described item (1-12), the absolute value of the speed reduction torque Td when the steering-operation steering angle θf (the front wheel slip angle) is large is smaller than the absolute value of the speed reduction torque Td when the steering-operation steering angle θf (the front wheel slip angle) is small.
   Therefore, the vehicle control apparatus can apply the speed reduction torque Td according to the cornering resistance generated due to the front wheel slip angle, thereby improving the traceability and the drivability.
(1-16) The vehicle control apparatus for the vehicle including the electric motor 1 (a speed reduction torque generation device) includes the brake pedal sensor 110d (a brake operation state detection portion) configured to detect the brake operation state of the driver, the accelerator pedal opening degree sensor 110c (an accelerator operation state detection portion) configured to detect the accelerator operation state of the driver, the steering-operation steering angle sensor 110b (a steering operation state detection portion) configured to detect the steering operation state of the driver, and the speed reduction torque correction portion 202 configured to, when the brake switch is set to OFF and the accelerator pedal opening degree APO is APO = 0 (the detected brake operation state and the accelerator operation state are each in an non-operation state) and the speed reduction torque is generated by the electric motor 1, correct the speed reduction torque Td in such a manner that the absolute value of the generated speed reduction torque Td reduces based on the detected steering-operation steering angle θf.
   Therefore, the vehicle control apparatus can improve the traceability and the drivability when the vehicle is turning in the coasting running state. The first embodiment has been described based on the example in which the electric motor 1, which is the driving source, is used as the speed reduction torque generation apparatus, but the coasting torque may be controlled by controlling an engine torque in the case of a vehicle unequipped with the electric motor, such as an engine vehicle. Further, the speed reduction torque may be controlled by controlling the brake braking force in the case where the vehicle uses a speed reduction torque generation apparatus that generates the braking force on the wheel, such as the brake apparatus. Further, the first embodiment has been described based on the example in which the steering-operation steering angle θf is used as the steering operation state, but may use, for example, a front wheel turning angle correlating with the steering torque and the steering-operation steering angel.
(1-17) In the vehicle control apparatus described in the above-described item (1-16), the detected steering operation state is the steering-operation steering angle θf. The speed reduction torque correction portion 202 corrects the speed reduction torque in such a manner that the absolute value of the speed reduction torque Td generated when the steering-operation steering angle θf is large falls below the absolute value of the speed reduction torque Td generated when the steering-operation steering angle θf is small.
   More specifically, the cornering resistance increases as the front wheel slip angle increases. Therefore, the vehicle control apparatus can compensate for the speed reduction corresponding to the cornering resistance based on the front wheel slip angle, thereby improving the traceability and the drivability.
(1-20) The vehicle control apparatus for the vehicle configured to apply the speed reduction torque Td, which is a predetermined coasting torque, at the time of the coasting running is configured to reduce the absolute value of the speed reduction torque Td when the vehicle is turning at the time of the coasting running compared to when the vehicle is not turning.

Therefore, the vehicle control apparatus can improve the traceability and the drivability at the time of the coasting running because controlling the speed reduction torque according to the torque applied from the road surface to the front wheel.

### (Second Embodiment)

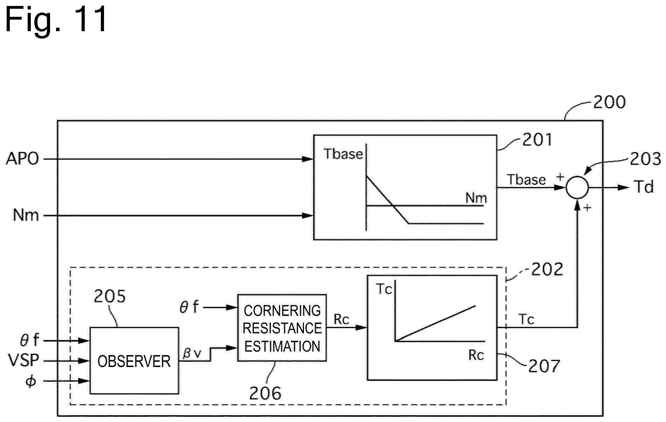

Next, a second embodiment will be described. The second embodiment has a similar basic configuration to the first embodiment, and therefore will be described focusing on only differences from the first embodiment. Fig. 11 is a control block diagram illustrating a configuration of a speed reduction torque calculation portion provided in a vehicle controller according to the second embodiment. The speed reduction torque calculation portion 200 according to the second embodiment includes the reference speed reduction torque calculation portion 201 and the speed reduction torque correction portion 202, and calculates the speed reduction torque Td imitating the engine brake that is applied when the driver releases the accelerator pedal with the accelerator pedal opening degree set to APO = 0 and the brake switch is set to OFF, so that the vehicle shifts to the coasting running. The reference speed reduction torque calculation portion 201 is similar to the first embodiment, and therefore only the speed reduction torque correction portion 202 will be described.

The speed reduction torque correction portion 202 includes an observer 205, a cornering resistance estimation portion 206, and a cornering resistance estimation portion 206.

The observer 205 calculates the steering-operation steering angle θf, and a yaw rate estimated value ϕ* based on the vehicle speed VSP, and corrects a lateral speed estimated value Vy* so as to eliminate a deviation between the actual yaw rate ϕ detected by the yaw rate sensor 110a and the yaw rate estimated value ϕ*. Then, the observer 205 calculates a vehicle sideslip angle βv from a ratio between the lateral speed estimated value Vy* and the vehicle speed VSP.

The cornering resistance estimation portion 206 calculates each of front and rear wheel slip angles δf and δr from the vehicle sideslip angle βv and a front wheel actual turning angle (a value acquired by dividing the steering-operation steering angle θf by a steering gear ratio). Then, the cornering resistance estimation portion 206 multiplies each of the front and rear wheel slip angles δf and δr by a cornering resistance coefficient Kr, and adds the calculated cornering resistance of each of the wheels, thereby calculating a cornering resistance Rc applied to the four wheels.

The correction torque calculation portion 207 calculates the correction torque Tc capable of compensating for the calculated cornering resistance Rc based on the map. More specifically, the correction torque calculation portion 207 calculates the correction torque Tc that increases as the cornering resistance Rc increases. When calculating this correction torque Tc, the correction torque calculation portion 207 may calculate a value capable of completely compensating for the cornering resistance Rc or may calculate a value capable of compensating for the cornering resistance Rc to some degree while leaving the cornering resistance Rc slightly. The correction torque Tc calculated here is not especially limited.

In the first embodiment, the speed reduction torque correction portion 202 calculates the correction torque Tc from the correction torque map when calculating the correction torque Tc. On the other hand, in the second embodiment, the speed reduction torque correction portion 202 estimates the cornering resistance Rc applied to each of the wheels based on the vehicle sideslip angle βv and calculates the correction torque Tc based on this cornering resistance Rc, and therefore can calculate the correction torque Tc further complying with the actual running state.

In the above-described manner, the second embodiment can bring about the following advantageous effects.
(2-14) In the vehicle control apparatus described in the above-described item (1-1), the speed reduction torque calculation portion 200 includes the cornering resistance estimation portion 206 configured to estimate the cornering resistance Rc from the calculated front wheel slip angle 5f, and calculate the speed reduction torque Td based on the estimated cornering resistance Rc.
   Therefore, the vehicle control apparatus can calculate the speed reduction torque Td based on the highly accurate cornering resistance Rc, thereby improving the traceability and the drivability when the vehicle is turning. (2-15) The vehicle control apparatus described in the above-described item (2-14) further includes the observer 205 (a sideslip angle estimation portion) configured to estimate the vehicle sideslip angle βv. The cornering resistance calculation portion 206 estimates the cornering resistance Rc based on the estimated vehicle sideslip angle βv.
   Therefore, the vehicle control apparatus can acquire the highly accurate estimated value of the cornering resistance Rc.
(2-18) The vehicle control method for the vehicle including the electric motor 1 (a speed reduction torque generation device) includes estimating the cornering resistance Rc generated when the vehicle is turning, and reducing the absolute value of the speed reduction torque Td (a speed reduction torque to be generated by the speed reduction torque generation device) as the estimated cornering resistance Rc increases.
   Therefore, the vehicle control apparatus can improve the traceability and the drivability because controlling the speed reduction torque according to the torque applied from the road surface to the front wheel.
(2-19) In the vehicle control method described in the above-described item (2-18), the speed reduction torque Td is calculated based on the reference speed reduction torque Tbase calculated from the accelerator operation state of the driver and/or the vehicle speed VSP, and the absolute value of the speed reduction torque Td is smaller than the absolute value of the reference speed reduction torque Tbase.

Therefore, the vehicle control apparatus can secure the traceability and the drivability according to the driving state.

Having described the present invention based on the first and second embodiments, the present invention is not limited to the above-described configuration and also covers any vehicle including the configuration of the present invention even if this configuration is a configuration other than the above-described configuration. For example, the embodiments have been described based on the example of the electric vehicle, but the present invention is not limited to the electric vehicle and can also be applied even to an engine vehicle and a hybrid vehicle including both the engine and the electric motor.

Further, in the embodiments, the present invention is applied mainly to when the coasting torque is generated, but the applicability of the present invention is not limited to when the coasting torque is generated. The present invention may apply the speed reduction torque when detecting the driver's intention to slow down the vehicle (for example, an APO change rate is lower than a predetermined negative value) even when the accelerator pedal opening degree APO is another value than zero, such as when one pedal control is performed, and correct this speed reduction torque based on the front wheel slip angle.

Further, the first embodiment has been described based on the example in which the vehicle controller 110 calculates the speed reduction torque, but may be configured in such a manner that the brake controller 50 calculates the speed reduction torque, and outputs a speed reduction torque request to the vehicle controller 110.

Further, in the first embodiment, the steering-operation steering angle θf is used as the value corresponding to the front wheel slip angle, but another parameter correlating with the front wheel slip angle may be used. The present invention is configured to calculate the correction torque according to the front wheel slip angle because, for example, the front wheel slip angle is not generated unless the vehicle is moving even when the steering-operation steering angle θf is simply generated while the vehicle is stopped. In other words, the present invention can be applied to any running scene where the front slip angle is generated.

The present invention may also be configured in the following manner.
(1) A vehicle control apparatus may include an accelerator operation state detection portion configured to detect an accelerator operation state of a driver, a front wheel slip angle calculation portion configured to calculate a front wheel slip angle, and a speed reduction torque calculation portion configured to calculate a speed reduction torque to be generated on a vehicle based on the accelerator operation state detected by the accelerator operation state detection portion and the front wheel slip angle calculated by the front wheel slip angle calculation portion.
(2) In the vehicle control apparatus described in (1), the speed reduction torque calculation portion may include a reference speed reduction torque calculation portion configured to calculate a reference speed reduction torque, and a speed reduction torque correction portion configured to correct the reference speed reduction torque based on the detected accelerator operation state and the front wheel slip angle.
(3) In the vehicle control apparatus described in (2), the speed reduction torque correction portion may correct the reference speed reduction torque in such a manner that an absolute value of the reference speed reduction torque after the correction falls below the absolute value of the reference speed reduction torque before the correction.
(4) In the vehicle control apparatus described in (3), the speed reduction torque correction portion may correct the reference speed reduction torque when the detected accelerator operation state is in a non-operation state.
(5) The vehicle control apparatus described in (4) may further include a steering operation state detection portion configured to detect a steering-operation steering state of the driver. The front wheel slip angle may be calculated based on the steering-operation steering angle detected by the steering operation state detection portion. The speed reduction torque correction portion may correct the reference speed reduction torque in such a manner that the absolute value of the reference speed reduction torque after the correction when the steering-operation steering angle is large falls below the absolute value of the reference speed reduction torque after the correction when the steering-operation steering angle is small.
(6) The vehicle control apparatus described in (5) may further include a speed calculation portion configured to calculate a speed of the vehicle or a speed at which a wheel rotates. The speed reduction torque correction portion may correct the reference speed reduction torque in such a manner that the absolute value of the reference speed reduction torque after the correction when the speed is high falls below the absolute value of the reference speed reduction torque after the correction when the speed is low.
(7) In the vehicle control apparatus described in (1), when the detected accelerator operation state is in a non-operation state, an absolute value of the speed reduction torque when the front wheel slip angle is calculated may be smaller than the absolute value of the speed reduction torque before the front wheel slip angle is calculated.
(8) In the vehicle control apparatus described in (7), the absolute value of the speed reduction torque when the front wheel slip angle is large may be smaller than the absolute value of the speed reduction torque when the front wheel slip angle is small.
(9) In the vehicle control apparatus described in (8), a change amount of the speed reduction torque in a region where the front wheel slip angle is large and a region where the front wheel slip angle is small may be smaller than the change amount of the speed reduction torque in a region between the region where the front wheel slip angle is large and the region where the front wheel slip angle is small.
(10) In the vehicle control apparatus described in (8), the absolute value of the speed reduction torque may reduce as the front wheel slip angle increases.
(11) The vehicle control apparatus described in (7) may further include a speed calculation portion configured to calculate a speed of the vehicle or a speed at which a wheel rotates. The absolute value of the speed reduction torque when the speed is high may be smaller than the absolute value of the speed reduction torque when the speed is low.
(12) The vehicle control apparatus described in (1) may further include a brake operation state detection portion configured to detect a brake operation state of the driver. The speed reduction torque calculation portion may calculate the speed reduction torque when the detected brake operation state is in a non-operation state.
(13) In the vehicle control apparatus described in (12), the absolute value of the speed reduction torque when the front wheel slip angle is large may be smaller than the absolute value of the speed reduction torque when the front wheel slip angle is small.
(14) In the vehicle control apparatus described in (1), the speed reduction torque calculation portion may include a cornering resistance estimation portion configured to estimate a cornering resistance from the calculated front wheel slip angle, and calculate the speed reduction torque based on the estimated cornering resistance.
(15) The vehicle control apparatus described in (14) may further include a sideslip angle estimation portion configured to estimate a sideslip angle of the vehicle. The cornering resistance calculation portion may estimate the cornering resistance based on the estimated sideslip angle.
(16) A vehicle control apparatus for a vehicle including a speed reduction torque generation device may include a brake operation state detection portion configured to detect a brake operation state of a driver, an accelerator operation state detection portion configured to detect an accelerator operation state of the driver, a steering operation state detection portion configured to detect a steering operation state of the driver, and a speed reduction torque correction portion configured to, when the detected brake operation state and the accelerator operation state are each in an non-operation state and a speed reduction torque is generated by the speed reduction torque generation device, correct the speed reduction torque in such a manner that an absolute value of the generated speed reduction torque reduces based on the detected steering operation state.
(17) In the vehicle control apparatus described in (16), the detected steering operation state may be a steering-operation steering angle. The speed reduction torque correction portion may correct the speed reduction torque in such a manner that an absolute value of the speed reduction torque generated when the steering-operation steering angle is large falls below the absolute value of the speed reduction torque generated when the steering-operation steering angle is small.
(18) A vehicle control apparatus for a vehicle configured to apply a predetermined coasting torque at the time of coasting running may be configured to reduce an absolute value of the predetermined coasting torque when the vehicle is turning at the time of the coasting running compared to when the vehicle is not turning.
(19) A vehicle control method for a vehicle including a speed reduction torque generation device may include estimating a cornering resistance generated when the vehicle is turning, and reducing an absolute value of a speed reduction torque to be generated by the speed reduction torque generation device as the estimated cornering resistance increases.
(20) In the vehicle control method described in (19), the speed reduction torque may be calculated based on a reference speed reduction torque calculated from an accelerator operation state of a driver and/or a vehicle speed, and the absolute value of the speed reduction torque may be smaller than an absolute value of the reference speed reduction torque.

Having described merely several embodiments of the present invention, those skilled in the art will be able to easily appreciate that the embodiments described as the examples can be modified or improved in various manners without substantially departing from the novel teachings and advantages of the present invention. Therefore, such modified or improved embodiments are intended to be also contained in the technical scope of the present invention. The above-described embodiments may also be arbitrarily combined.

The present application claims priority under the Paris Convention to Japanese Patent Application No. 2015-058978 filed on March 23, 2015. The entire disclosure of Japanese Patent Application No. 2015-058978 filed on March 23, 2015 including the specification, the claims, the drawings, and the abstract is incorporated herein by reference in its entirety.

### REFERENCE SIGN LIST

- 1: electric motor
- 3a: speed reduction mechanism
- 4: drive shaft
- 5: hydraulic unit
- 9: wheel speed sensor
- 10: inverter
- 50: brake controller
- 60: battery controller
- 100: motor controller
- 110: vehicle controller
- 110a: yaw rate sensor
- 110b: steering-operation steering angle sensor
- 110c: accelerator pedal opening degree sensor
- 110d: brake pedal sensor
- 200: speed reduction torque calculation portion
- 201: reference speed reduction torque calculation portion 202 speed reduction torque correction portion
- 203: addition portion
- 205: observer
- 206: cornering resistance estimation portion
- 207: correction torque calculation portion
- FF, FR: front wheel
- W/C: wheel cylinder

## Claims

1. A vehicle control apparatus comprising:
an accelerator operation state detection portion configured to detect an accelerator operation state of a driver;
a front wheel slip angle calculation portion configured to calculate a front wheel slip angle; and
a speed reduction torque calculation portion configured to calculate a speed reduction torque to be generated on a vehicle based on the accelerator operation state detected by the accelerator operation state detection portion and the front wheel slip angle calculated by the front wheel slip angle calculation portion.

2. The vehicle control apparatus according to claim 1, wherein the speed reduction torque calculation portion includes a reference speed reduction torque calculation portion configured to calculate a reference speed reduction torque, and a speed reduction torque correction portion configured to correct the reference speed reduction torque based on the detected accelerator operation state and the front wheel slip angle.

3. The vehicle control apparatus according to claim 2, wherein the speed reduction torque correction portion corrects the reference speed reduction torque in such a manner that an absolute value of the reference speed reduction torque after the correction falls below the absolute value of the reference speed reduction torque before the correction.

4. The vehicle control apparatus according to claim 3, wherein the speed reduction torque correction portion corrects the reference speed reduction torque when the detected accelerator operation state is in a non-operation state.

5. The vehicle control apparatus according to claim 4, further comprising a steering operation state detection portion configured to detect a steering-operation steering state of the driver,
wherein the front wheel slip angle is calculated based on the steering-operation steering angle detected by the steering operation state detection portion, and
wherein the speed reduction torque correction portion corrects the reference speed reduction torque in such a manner that the absolute value of the reference speed reduction torque after the correction when the steering-operation steering angle is large falls below the absolute value of the reference speed reduction torque after the correction when the steering-operation steering angle is small.

6. The vehicle control apparatus according to claim 5, further comprising a speed calculation portion configured to calculate a speed of the vehicle or a speed at which a wheel rotates,
wherein the speed reduction torque correction portion corrects the reference speed reduction torque in such a manner that the absolute value of the reference speed reduction torque after the correction when the speed is high falls below the absolute value of the reference speed reduction torque after the correction when the speed is low.

7. The vehicle control apparatus according to claim 1, wherein, when the detected accelerator operation state is in a non-operation state, an absolute value of the speed reduction torque when the front wheel slip angle is calculated is smaller than the absolute value of the speed reduction torque before the front wheel slip angle is calculated.

8. The vehicle control apparatus according to claim 7, wherein the absolute value of the speed reduction torque when the front wheel slip angle is large is smaller than the absolute value of the speed reduction torque when the front wheel slip angle is small.

9. The vehicle control apparatus according to claim 8, wherein a change amount of the speed reduction torque in a region where the front wheel slip angle is large and a region where the front wheel slip angle is small is smaller than the change amount of the speed reduction torque in a region between the region where the front wheel slip angle is large and the region where the front wheel slip angle is small.

10. The vehicle control apparatus according to claim 8, wherein the absolute value of the speed reduction torque reduces as the front wheel slip angle increases.

11. The vehicle control apparatus according to claim 7, further comprising a speed calculation portion configured to calculate a speed of the vehicle or a speed at which a wheel rotates,
wherein the absolute value of the speed reduction torque when the speed is high is smaller than the absolute value of the speed reduction torque when the speed is low.

12. The vehicle control apparatus according to claim 1, further comprising a brake operation state detection portion configured to detect a brake operation state of the driver,
wherein the speed reduction torque calculation portion calculates the speed reduction torque when the detected brake operation state is in a non-operation state.

13. The vehicle control apparatus according to claim 12, wherein the absolute value of the speed reduction torque when the front wheel slip angle is large is smaller than the absolute value of the speed reduction torque when the front wheel slip angle is small.

14. The vehicle control apparatus according to claim 1, wherein the speed reduction torque calculation portion includes a cornering resistance estimation portion configured to estimate a cornering resistance from the calculated front wheel slip angle, and calculates the speed reduction torque based on the estimated cornering resistance.

15. The vehicle control apparatus according to claim 14, further comprising a sideslip angle estimation portion configured to estimate a sideslip angle of the vehicle,
wherein the cornering resistance calculation portion estimates the cornering resistance based on the estimated sideslip angle.

16. A vehicle control apparatus for a vehicle including a speed reduction torque generation device, the vehicle control apparatus comprising:
a brake operation state detection portion configured to detect a brake operation state of a driver;
an accelerator operation state detection portion configured to detect an accelerator operation state of the driver;
a steering operation state detection portion configured to detect a steering operation state of the driver; and
a speed reduction torque correction portion configured to, when the detected brake operation state and the accelerator operation state are each in an non-operation state and a speed reduction torque is generated by the speed reduction torque generation device, correct the speed reduction torque in such a manner that an absolute value of the generated speed reduction torque reduces based on the detected steering operation state.

17. The vehicle control apparatus according to claim 16, wherein the detected steering operation state is a steering-operation steering angle, and
wherein the speed reduction torque correction portion corrects the speed reduction torque in such a manner that an absolute value of the speed reduction torque generated when the steering-operation steering angle is large falls below the absolute value of the speed reduction torque generated when the steering-operation steering angle is small.

18. A vehicle control apparatus for a vehicle configured to apply a predetermined coasting torque at the time of coasting running, wherein the vehicle control apparatus is configured to reduce an absolute value of the predetermined coasting torque when the vehicle is turning at the time of the coasting running compared to when the vehicle is not turning.

19. A vehicle control method for a vehicle including a speed reduction torque generation device, the vehicle control method comprising:
estimating a cornering resistance generated when the vehicle is turning; and
reducing an absolute value of a speed reduction torque to be generated by the speed reduction torque generation device as the estimated cornering resistance increases.

20. The vehicle control method according to claim 19, wherein the speed reduction torque is calculated based on a reference speed reduction torque calculated from an accelerator operation state of a driver and/or a vehicle speed, and the absolute value of the speed reduction torque is smaller than an absolute value of the reference speed reduction torque.
